# EUROPÄISCHE PATENTSCHRIFT

(11) **EP 0 360 056 B1**
(45) Veröffentlichungstag und Bekanntmachung des Hinweises auf die Patenterteilung: **14.12.1994**
(21) Anmeldenummer: 89116204.2
(22) Anmeldetag: 01.09.1989
(51) Int. Cl.: H04M 19/02

(54) **Schaltungsanordnung für Fernmeldevermittlungsanlagen, insbesondere Fernsprechvermittlungsanlagen, mit betriebsspannungsversorgten und zusatzspannungsversorgten Schalteinrichtungen**
Circuitry for telecommunication, especially telephone exchanges with switching devices powered by a service voltage and an auxiliary voltage
Dispositif pour des centraux de télécommunications, spécialement pour les centraux téléphoniques, qui ont des circuits alimentés par une tension de service et une tension auxiliaire

(30) Priorität: 20.09.1988 DE 3831945
(43) Veröffentlichungstag der Anmeldung: 28.03.1990
(73) Patentinhaber: SIEMENS AKTIENGESELLSCHAFT, 80333 München (DE)
(72) Erfinder: Birlmeier, Josef, Dipl.-Ing., D-8024 Deisenhofen (DE); Murr, Robert, Dipl.-Ing., D-8000 München 71 (DE)

(56) Entgegenhaltungen:
- DE-B- 2 048 195
- US-A- 3 601 551

## Beschreibung

Die Erfindung bezieht sich auf eine Schaltungsanordnung für Fernmeldeanlagen, insbesondere Fernsprechvermittlungsanlagen, bei denen betriebsspannungsversorgte, individuelle Schalteinrichtungen, insbesondere Teilnehmeranschlußschaltungen, die in Einbauplätzen von Gestellrahmen untergebracht sind, von einer redundanten Zusatzspannungsquelle mit einer Zusatzspannung, insbesondere Rufwechselspannung, versorgt sind.

An Fernsprechvermittlungsanlagen werden besonders hohe Anforderungen bezüglich Ausfallsicherheit gestellt. Dazu ist es allgemein üblich, Anlagenteile redundant vorzusehen, wobei im Normalbetrieb ein dafür vorgesehenes Anlagenteil lasttragend ist und im Ersatzschaltfall, also bei Ausfall des als lasttragend vorgesehenen Anlagenteils, auf das redundante Anlagenteil umgeschaltet wird.

Bei Fernsprechvermittlungsanlagen mit Gestellrahmen alter Bauart ist für jede einer Zusatzspannungsquelle zugeordneten Gruppe von Schalteinrichtungen ein Umschalter vorgesehen, mit dessen Hilfe bei Ausfall der eigenen Zusatzspannung von der eigenen Zusatzspannungsquelle auf die Zusatzspannungsquelle der anderen Gruppe umgeschaltet wird. Auf diese Weise sind also im Normalbetrieb beide Zusatzspannungsquellen etwa gleich stark ausgelastet; nur im Ersatzschaltbetrieb wird die gesamte Belastung seitens der individuellen Schalteinrichtungen beider Gruppen einer einzigen Zusatzspannungsquelle aufgebürdet, und zwar derjenigen, die nicht von einer Betriebsstörung betroffen ist.-

Bei Fernsprechvermittlungsanlagen mit Gestellrahmen neuer Bauart sind von jeder der beiden Zusatzspannungsquellen getrennte Zuführungsleitungen zu sämtlichen individuellen Schalteinrichtungen geführt und ein Umschalter pro individuelle Schalteineinrichtung vorgesehen, mit dessen Hilfe jede individuelle Schalteinrichtung an die eine oder die andere Zusatzspannungsquelle angeschaltet werden kann. Auch in diesem Falle ist es bekannt, die individuellen Schalteinrichtungen in zwei Gruppen zu verteilen und im Normalbetrieb die individuellen Schalteinrichtungen der einen Gruppe von der einen Zusatzspannungsquelle her versorgen zu lassen, während die individuellen Schalteinrichtungen der anderen Gruppe von der anderen Zusatzspannungsquelle her versorgt werden. Fällt eine der beiden Zusatzspannungsquellen, bedingt durch eine Betriebsstörung aus, so können sämtliche individuellen Schalteinrichtungen, die bis dahin von dieser Zusatzspannungsquelle her versorgt waren, umgeschaltet werden zu der anderen Zusatzspannungsquelle, die nun die gesamte Versorgung übernimmt.- Diese Dezentralisierung der Umschaltung dient bekanntlich einer Erhöhung der Sicherheit, erfordert aber auch entsprechend mehr Aufwand.

In bekannten Fernsprechvermittlungsanlagen sind hinsichtlich der beschriebenen Umschaltung beide bekannten Prinzipien realisiert. Es gibt Anlagen mit Zusatzspannungsquellen mit gemeinsamem Umschalter pro Gruppe individueller Schalteinrichtungen sowie Anlagen mit dezentraler Umschaltung in der angegebenen Weise.

Die individuellen Schalteinrichtungen sind üblicherweise in Gestellrahmen untergebracht. Für die Zuführung der Zusatzspannung sind ebenso wie für die der Betriebsspannung Steckverbindungen vorgesehen. Diese Steckverbindungen befinden sich zwischen jeder individuellen Schalteinrichtung einerseits und einem im Gestellrahmen zu jedem Einbauplatz jeder der Schalteinrichtungen geführten Zuführungskabel andererseits.

In bestehenden Fernsprechvermittlungsanlagen älterer Bauart ist demnach das Prinzip des für eine Gruppe individueller Schalteinrichtungen zentralen Umschalters realisiert, wohingegen in Fernsprechvermittlungsanlagen neuerer Bauart das Prinzip des dezentralen Umschalters pro individuelle Schalteinrichtung weit verbreitet ist. Fernsprechvermittlungsanlagen von an sich gleicher Arbeitsweise unterscheiden sich unter anderem hinsichtlich des verwendeten Prinzips der angesprochenen Umschaltung. Es mußte bisher deshalb bei einem Einsatz von individuellen Schalteinrichtungen immer berücksichtigt werden, welches Umschalteprinzip in der betreffenden Fernsprechvermittlungsanlage bereits zur Anwendung gekommen ist.

Für die Erfindung besteht die Aufgabe darin, dafür zu sorgen, daß sich individuelle Schalteinrichtungen sowohl in Fernsprechvermittlungsanlagen einsetzen lassen, in denen das Prinzip der zentralen Umschaltung verwirklicht ist, als auch in Fernmeldeanlagen, in denen das Prinzip der dezentralen Umschaltung realisiert ist.

Die Erfindung löst die gestellte Aufgabe durch die im Patentanspruch 1 angegebenen Merkmale.

Die erfindungsgemäßen Schalteinrichtungen sind sowohl in Gestellrahmen alter Bauart, wie auch in Gestellrahmen neuer Bauart verwendbar, womit sich der logistische Aufwand für die ansonsten notwendige Bereitstellung unterschiedlicher Schalteinrichtungen reduziert.

Durch die Weiterbildung der Erfindung gemäß Patentanspruch 2 werden Schalteinrichtungen, die an sich für eine Verwendung in Gestellrahmen alter Bauart vorgesehen sind, auch in Gestellrahmen neuer Bauart verwendbar.

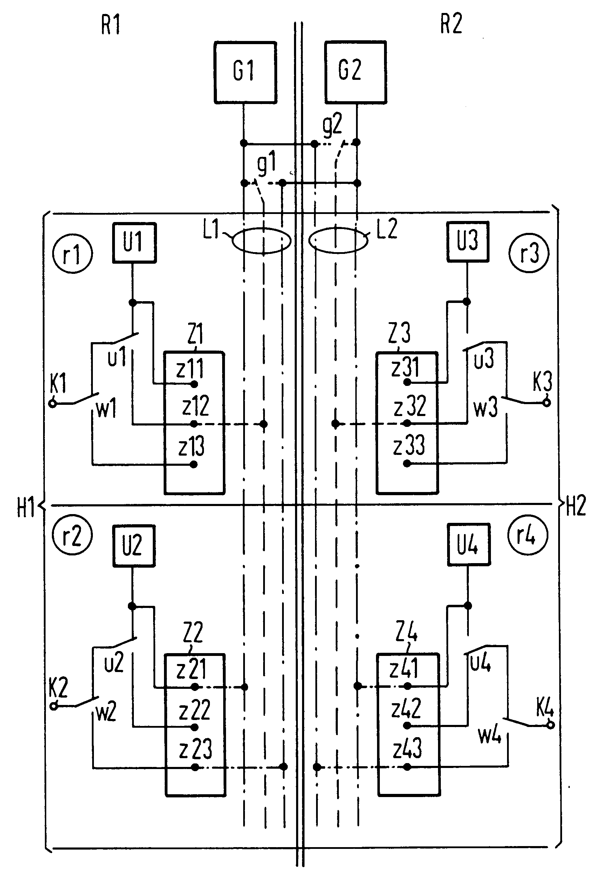

In der Zeichnung ist ein Ausführungsbeispiel der Erfindung nur in wesentlich zu ihrem Verständnis beitragenden Bestandsteile dargestellt, worauf dieselbe jedoch keineswegs beschränkt ist.

Die Beschreibung geht davon aus, daß eine Anzahl von individuellen, zum Beispiel verbindungsindividuellen Schalteinrichtungen vorgesehen ist, die selber jedoch nicht im einzelnen dargestellt sind. Diese Schalteinrichtungen mögen zum Beispiel Teilnehmeranschlußschaltungen sein. Eine solche Schalteinrichtung kann auch eine Mehrfachteilnehmeranschlußschaltung sein.

Diese individuellen Schalteinrichtungen sind auf nicht im einzelnen dargestellte Weise mit den erforderlichen Betriebsspannungen versorgt. Diese werden jeweils bei Einschaltung einer Schalteinrichtung wirksam geschaltet. Ist also eine individuelle Schalteinrichtung eingeschaltet, so bedeutet dies zugleich, daß in ihr die erforderlichen Betriebsspannungen vorhanden sind.

Den individuellen Schalteinrichtungen wird außerdem eine Zusatzspannung zugeführt, wobei es sich um die Rufwechselspannung handeln möge. Diese Zusatzspannung wird von zwei aus Sicherheitsgründen in an sich bekannter Weise parallel vorgesehenen Zusatzspannungsquellen G1 und G2 geliefert. Hierbei kann es sich um Ruf- und Signalmaschinen konventioneller Bauart handeln, aber auch um Rufspannungsgeneratoren, die auf elektronischer Basis arbeiten, sowie um Ton- und auch Taktgeneratoren.

Wie erwähnt, werden die Zusatzspannungsquellen aus Sicherheitsgründen zu zweit vorgesehen. Sie arbeiten parallel. Die individuellen Schalteinrichtungen sind desgleichen in zwei Gruppen unterteilt und jeder Gruppe ist in an sich bekannter Weise eine Zusatzspannungsquelle zugeordnet. Die individuellen Schalteinrichtungen sind also in eine erste Gruppe H1 und eine zweite Gruppe H2 zusammengefaßt und sind gruppenweise der dementsprechend ersten und zweiten Zusatzspannungsquelle G1 und G2 gleichnamig zugeordnet, das heißt der Gruppe H1 von individuellen Schalteinrichtungen ist die Zusatzspannungsquelle G1 zugeordnet und der Gruppe H2 von individuellen Schalteinrichtungen ist die Zusatzspannungsquelle G2 zugeordnet.

Im Normalbetrieb sind die individuellen Schalteinrichtungen jeweils einer Gruppe, zum Beispiel H1, mit der jeweils gleichnamigen Zusatzspannungsquelle, zum Beispiel G1, verbunden. Dagegen werden im Ersatzschaltbetrieb die individuellen Schalteinrichtungen einer Gruppe, zum Beispiel H1, von der eigenen, das heißt gleichnamigen Zusatzspannungsquelle, zum Beispiel G1, zu der Zusatzspannungsquelle der jeweils anderen Gruppe, zum Beispiel G2, hin umgeschaltet (Einzelheiten hierzu sind weiter unten beschrieben). Entsprechendes gilt für das umgekehrte Beispiel hinsichtlich der beiden Gruppen und der beiden Zusatzspannungsquellen. Wie diese Umschaltung erfolgt, wird etwas weiter unten im einzelnen beschrieben.

Die individuellen Schalteinrichtungen sind in Gestellrahmen R1 und R2 untergebracht. Jeder Gestellrahmen enthält eine der Anzahl von in ihm unterzubringenden individuellen Schalteinrichtungen entsprechende Anzahl von Einbauplätzen, von denen nur die Einbauplätze r1 bis r4 angedeutet sind. Ein Einbauplatz ist also immer für jeweils eine individuelle Schalteinrichtung vorgesehen. In der Zeichnung sind nur zwei Einbauplätze, zum Beispiel r1 und r2, pro Gestellrahmen, zum Beispiel R1, vorgesehen; tatsächlich ist aber die Anzahl von Einbauplätzen pro Gestellrahmen wesentlich größer. Ein Gestellrahmen, zum Beispiel R1, trägt außerdem die der betreffenden Gruppe zum Beispiel H1, von individuellen Schalteinrichtungen zugeordnete Zusatzspannungsquelle zum Beispiel G1. Für die Zuführung der Zusatzspannung von der Zusatzspannungsquelle ist ein Zuführungskabel, zum Beispiel L1, pro Gestellrahmen, zum Beispiel R1, vorgesehen. Das Zuführungskabel ist zu jedem Einbauplatz jeder der Schalteinrichtungen geführt. Zwischen jeder individuellen Schalteinrichtung einerseits und dem Zuführungskabel andererseits ist je eine Steckverbindung Z1 bis Z4 vorgesehen. Ebenso wie für die Zuführung der Betriebsspannung sind also für die Zuführung der Zusatzspannung diese Steckverbindungen zwischen jeder individuellen Schalteinrichtung einerseits und dem im Gestell zu jedem Einbauplatz jeder der individuellen Schalteinrichtungen geführten Zuführungskabel andererseits vorgesehen.

Jede der Steckverbindungen Z1 bis Z4 umfaßt drei Steckverbindungskontakte, zum Beispiel z11 bis z13. Für eine direkte Zuführung der Zusatzspannung von der ersten Zusatzspannungsquelle G1 und von der zweiten Zusatzspannungsquelle G2 ist ein dementsprechend erster Steckverbindungskontakt z11 und zweiter Steckverbindungskontakt z13 pro Einbauplatz vorgesehen. Ferner ist ein dritter Steckverbindungskontakt, zum Beispiel z12 pro Einbauplatz und Steckverbindung vorgesehen. Gegenüber einer direkten Zuführung der Zusatzspannung von der ersten und von der zweiten Zusatzspannungsquelle zu den Einbauplätzen der individuellen Schalteinrichtungen beider Gruppen ist alternativ hierzu auch eine Zuführung der Zusatzspannung über die Mittelfeder eines jeder der Zusatzspannungsquellen zugeordneten Umschalters, zum Beispiel g1, möglich.

An dieser Stelle ist einzufügen, daß es Gestellrahmen zweierlei Bauart gibt, die lediglich zu Unterscheidungszwecken als Gestellrahmen alter Bauart und Gestellrahmen neuer Bauart bezeichnet werden. Bei den Gestellrahmen alter Bauart ist der genannte Umschalter, zum Beispiel g1, vorgesehen. In diesem Falle enthält das betreffende Zuführungskabel, zum Beispiel L1, lediglich die gestrichelt dargestellten Teile, das heißt die gestrichelt dargestellte mittlere Leitungsader sowie den gestrichelt dargestellten Kontakt g1.

Bei Gestellrahmen neuerer Bauart sind die Umschalter g1 und g2 nicht vorhanden, und es sind auch nicht die gestrichelt dargestellten Leiterbahnen vorhanden. Stattdessen sind bei Gestellrahmen neuer Bauart die strichpunktiert dargestellten beiden Leiterbahnen pro Gestellrahmen vorhanden.

Bei einer Zusatzspannungsquelle alter Bauart in einem Gestellrahmen alter Bauart, zum Beispiel R1, ist also der zugeordnete Umschalter g1 vorgesehen. Dessen Mittelfeder dient zur Zuführung der Zusatzspannung zum dritten Steckverbindungskontakt, zum Beispiel z12 an jeder der betreffenden Steckverbindungen, zum Beispiel Z1 und Z2. Die Ruhefeder des Umschalters, zum Beispiel g1, in einem Gestellrahmen zum Beispiel R1, ist mit der jeweils zugeordneten Zusatzspannungsquelle, zum Beispiel G1, verbunden. Dagegen ist die Arbeitsfeder des betreffenden Umschalters mit der jeweils anderen Zusatzspannungsquelle, zum Beispiel G2, verbunden. Der Umschalter befindet sich im Normalbetrieb, das heißt wenn beide Zusatzspannungsquellen störungsfrei arbeiten, in der Zeichnung dargestellten Ruhelage. Dagegen befindet sich der betreffende Umschalter, zum Beispiel g1 im Ersatzschaltbetrieb, das heißt, wenn die Zusatzspannungsquelle G1 nicht in der erforderlichen Weise arbeitet, in seiner Arbeitslage. Dann wird die gestrichelt dargestellte Leitungsader des Zusatzkabels, zum Beispiel L1 mit der Zusatzspannungsquelle des anderen Gestellrahmens, zum Beispiel R2 verbunden.

Die beiden Umschalter g1 und g2 verwirklichen das Prinzip der zentralen Ersatzschaltung. Immer wenn eine Zusatzspannungsquelle nicht in der vorschriftsmäßigen Weise arbeitet, wird der zugehörige Umschalter aus seiner Ruhelage in seine Arbeitslage umgelegt. Dann werden die individuellen Schalteinrichtungen beider Gruppen zugleich von ein und derselben Zusatzspannungsquelle her versorgt.

Demgegenüber gibt es jedoch auch das Prinzip der dezentralen Umschaltung. An die für die individuellen Schalteinrichtungen einer Gruppe gemeinsamen Umschalter g1 und g2 werden relativ hohe Sicherheitsanforderungen gestellt. Werden diese Umschalter von einer Störung betroffen, so kann dies zur Folge haben, daß sämtliche individuellen Schalteinrichtungen der betreffenden Gruppe nicht mehr arbeiten können. Deshalb ist neben dem Prinzip der zentralen Umschaltung auch das Prinzip der dezentralen Umschaltung in an sich bekannter Weise eingeführt worden. Hie bereits ausgeführt wurde, entfallen dann die Umschalter g1 und g2 und die gestrichelt dargestellten Verbindungen. Statt dessen sind dann die strichpunktiert dargestellten Verbindungen vorgesehen. Gestellrahmen alter Bauart und Gestellrahmen neuer Bauart unterscheiden sich also dadurch, daß entweder die gestrichelt dargestellten Verbindungen bis zu den Einbauplätzen hin und deren Steckverbindungen vorgesehen sind, oder die strichpunktiert dargestellten Verbindungen. Bezüglich des Einbauplatzes r1 ist ein Gestellrahmen alter Bauart angedeutet, in dem nur die gestrichelt dargestellte Verbindung vom Zuführungskabel zu der dem Einbauplatz r1 entsprechenden Steckverbindung Z1 existiert. Bezüglich des Einbauplatzes r2 ist dagegen ein Gestellrahmen neuer Bauart angedeutet, in dem vom Zuführungskabel L1 nur die strichpunktiert dargestellten Verbindungen zu der dem Einbauplatz r2 entsprechenden Steckverbindung Z2 vorhanden sind. Der Gestellrahmen R1 ist also bezüglich des Zuführungskabels L1 so dargestellt, wie wenn er ein Gestellrahmen alter Bauart wäre hinsichtlich des Einbauplatzes r1 und ein Gestellrahmen neuer Bauart hinsichtlich des Einbauplatzes r2.

Von den an den genannten Einbauplätzen vorgesehenen individuellen Schalteinrichtungen ist unter anderem je eine Überwachungseinrichtung zum Beispiel U1 dargestellt. Diese Überwachungseinrichtung, zum Beispiel U1, überwacht über den ersten Steckverbindungskontakt, zum Beispiel z11,ein Vorhandensein der Zusatzspannung. Wie nun das in der Zeichnung dargestellte Ausführungsbeispiel zeigt, ist in Bezug auf den Einbauplatz r1 dargestellt, daß der Gestellrahmen R1 ein Gestellrahmen alter Bauart sei. Dagegen ist in dem Ausführungsbeispiel gemäß Zeichnung in Bezug auf den Einbauplatz r2 dargestellt, daß es sich beim Gestellrahmen R1 um einen Gestellrahmen neuer Bauart handelt. Demgemäß bestehen hier die "strichpunktiert" dargestellten Verbindungen vom Zuführungskabel L1 zur Steckverbindung Z2. Im Falle der Darstellung gemäß Einbauplatz r2 handelt es sich bei dem Gestellrahmen R1 also um einen Gestellrahmen neuer Bauart. Der Gestellrahmen R1 kann also ein Gestellrahmen alter Bauart oder ein Getellrahmen neuer Bauart sein. Die eine Möglichkeit kommt in der Darstellung des Einbauplatzes r1 zum Ausdruck, während die andere Möglichkeit in der Darstellung des Einbauplatzes r2 zum Ausdruck kommt. Ferner kann ein Gestellrahmen so ausgebildet sein, daß für das Zuführungskabel sowohl die gestrichelt dargestellten elektrischen Verbindungen als auch die strichpunktierten vorgesehen sind. Unter dieser Voraussetzung können außer den bisher beschriebenen individuellen Schalteinrichtungen auch solche eingesetzt werden, bei denen nur eine Verbindung zu dem dritten Steckverbindungskontakt besteht (individuelle Schalteinrichtungen älterer Bauart).

Die Überwachungseinrichtung pro individuelle Schalteinrichtung überwacht also ein Vorhandensein der Zusatzspannung.Im Falle des Vorhandenseins eines Gestellrahmens alter Bauart (vgl. Einbauplatz r1) findet die betreffende Überwachungseinrichtung, zum Beispiel U1, über den betreffenden Steckverbindungskontakt, zum Beispiel z12, die Zusatzspannung nicht vor. Dagegen findet im Falle ds Vorhandenseins eines Gestellrahmens neuer Bauart (vgl. Einbauplatz r2) die betreffende Überwachungseinrichtung, zum Beispiel U2, die Zusatzspannung von der Zusatzspannungsquelle G1 vor, und zwar über den betreffenden ersten Steckverbindungskontakt, zum Beispiel z21. Die Überwachungseinrichtung einer individuellen Schalteinrichtung überwacht also bei deren Einschaltung, ob bei Zusammenführung der betreffenden Steckverbindung, zum Beispiel Z1 oder Z2, die Zusatzspannung über den betreffenden ersten Steckverbindungskontakt, zum Beispiel z11 oder z21, zugeführt wird oder nicht. Im Falle eines Gestellrahmens alter Bauart, dargestellt im Zusammenhang mit dem Einbauplatz r1, wird die Zusatzspannung über den ersten Steckverbindungskontakt z11 nicht zugeführt. Im Falle eines Gestellrahmens neuer Bauart wird jedoch die Zusatzspannung über den betrefenden ersten Steckverbindungskontakt z21 der Überwachungseinrichtung U2 zugeführt.

Die Überwachungseinrichtungen U1 und U2 arbeiten nun in der Weise, daß dann, wenn die Zusatzspannung über den ersten Steckverbindungskontakt zugeführt wird, zum Beispiel über z21, eine Zusatzspannungszuführungsklemme, zum Beispiel K2 mit der Zusatzspannung von der Zusatzspannungsquelle G1 verbunden bleibt, zum Beispiel über den Steckverbindungskontakt z21 und über die Ruheseiten der Umschaltkontakte u2 und w2. Der Umschaltekontakt u2 wird von der Überwachungseinrichtung U2 gesteuert. Entsprechendes gilt für den Umschaltekontakt u1 und die Überwachungseinrichtung U1. Die Überwachungseinrichtungen U1 und U2 arbeiten invers, das heißt dann, wenn sie bei Einschaltung der betreffenden individuellen Schalteinrichtung die Zusatzspannung erhalten, dann belassen sie ihren jeweils zugeordneten Umschaltekontakt in der dargestellten Ruhelage. Wenn die Überwachungseinrichtungen jedoch die Zusatzspannung nicht erhalten, schalten sie ihren Umschaltekontakt u1 bzw. u2 aus der dargestellten Ruhelage in die Arbeitslage. Im Falle des Vorhandenseins eines Gestellrahmens neuer Bauart, dargestellt in Zusammenhang mit dem Einbauplatz r2, erhält die betreffende Überwachungseinrichtung U2 die Zusatzspannung über den ersten Steckverbindungskontakt z21. Deshalb beläßt sie die dargestellte Verbindung zwischen der Zusatzspannungszuführungsklemme K2 und dem ersten Steckverbindungskontakt z21. Im Falle des Vorhandenseins eines Gestellrahmens alter Bauart (dargestellt in Zusammenhang mit dem Einbauplatz r1) erhält die betreffende Überwachungseinrichtung U1 die Zusatzspannung nicht. Deshalb bringt sie ihren Umschaltekontakt u1 aus der dargestellten Ruhelage in die Arbeitslage. Dadurch bewirkt sie, daß die Zusatzspannungszuführungsklemme K1 von dem ersten Steckverbindungskontakt z11 zu dem dritten Steckverbindungskontakt z12 hin umgeschaltet wird. Über die Zusatzspannungszuführungsklemme K1 wird die Zusatzspannung der betreffenden individuellen Schalteinrichtung also zugeführt. Die individuellen Schalteinrichtungen an den Einbauplätzen r1 und r2 sind also gleich aufgebaut. Je nachdem aber ob ein Gestellrahmen alter Bauart oder ein Gestell rahmen neuer Bauart vorhanden ist, reagieren die individuellen Schalteinrichtungen mit Hilfe ihrer Überwachungseinrichtungen U1 und U2 verschieden, jedoch immer mit der gleichen Wirkung, daß die Zusatzspannung der betreffenden Zusatzspannungszuführungsklemme K1 bzw. K2 zugeführt wird. Über diese Klemmen werden die individuellen Schalteinrichtungen mit der Zusatzspannung versorgt.

Es kann nun der Fall eintreten, daß eine Zusatzspannung ausfällt. Bei Gestellrahmen alter Bauart ist - wie bereits beschrieben wurde, der gemeinsame Umschalter, zum Beispiel g1, vorgesehen. In diesem Falle wird in der bereits beschriebenen Weise zentral, das heißt gemeinsam für die individuellen Schalteinrichtungen einer Gruppe, bewerkstelligt, daß die gestrichelt dargestellte Leitungsader des betreffenden Zuführungskabels, zum Beispiel L1,von der eigenen Zusatzspannungsquelle, zum Beispiel G1 zu der Partner-Zusatzspannungsquelle, zum Beispiel G2, hin umgeschaltet wird. In diesem Falle gibt es innerhalb der individuellen Schalteinrichtungen, das heißt bei ihren Überwachungseinrichtungen, keine Reaktion. Die Zusatzspannung wird statt von der Zusatzspannungsquelle der eigenen Gruppe nunmehr von der Zusatzspannungsquelle der anderen Gruppe geliefert. Dies geschieht über jeweils den dritten Steckverbindungskontakt und die Arbeitsseite jedes der Umschalter u1 und u2.

Im Falle des Vorhandenseins eines Gestellrahmens neuer Bauart ist jedoch der gemeinsame Umschalter, zum Beispiel g1, nicht vorhanden. Anstelle der gestrichelt dargestellten Leitungsader sind die strichpunktiert dargestellten Leitungsadern im Zuführungskabel, zum Beispiel L1, vorhanden. Dies ist in Zusammenhang mit dem Einbauplatz r2 dargestellt. Fällt nun bei Vorhandensein eines Gestellrahmens neuer Bauart die Zusatzspannung von der gruppeneigenen Zusatzspannungsquelle, zum Beispiel G1, aus, so reagiert hierauf die Überwachungseinrichtung U2. Wenn nach Einschaltung der individuellen Schalteinrichtung am Einbauplatz r2 die über die erste Steckverbindung z21 zugeführte Zusatzspannung ausfällt so schaltet sie die Zusatzspannungszuführungsklemme K2 mit Hilfe des Umschaltekontaktes w2 von dem ersten Steckverbindungskontakt z21 zum zweiten Steckverbindungskontakt z23 hin um. Der Umschaltekontakt w2 wird also nur dann von seiner in der Zeichnung dargestellten Ruhelage in seine Arbeitslage umgeschaltet, wenn nach Einschaltung einer individuellen Schalteinrichtung und nach einem Empfang der Zusatzspannung in der betreffenden Überwachungseinrichtung, zum Beispiel U2, wobei der betreffende Umschalter u2 nicht betätigt wird, die Zusatzspannung wieder ausfällt. Dann wird der betreffende zweite Umschalter w2 aus seiner dargestellten Ruhelage in die Arbeitslage umgeschaltet. Dadurch wird die Zusatzspannungszuführungsklemme K2 von dem ersten Steckverbindungskontakt z21 zum zweiten Steckverbindungskontakt z23 hin umgeschaltet. Dadurch wird die Zusatzspannungs-Versorgung der betreffenden individuellen Schalteinrichtung von der gruppeneigenen Zusatzspannungsquelle G1 zur Partner-Zusatzspannungsquelle G2 hin umgeschaltet.

Die individuellen Schalteinrichtungen sind also kompatibel. Sie sind einheitlich aufgebaut hinsichtlich der Strompfade zur Zuführung der Zusatzspannung. Sie reagieren mit Hilfe ihrer Überwachungseinrichtungen verschieden, je nachdem, ob ein Gestellrahmen alter Bauart oder ein Getellrahmen neuer Bauart vorhanden ist. Mit ein und derselben Überwachungseinrichtung reagieren die verbindungsindividuellen Schalteinrichtungen auf einen Ausfall der Zusatzspannung, wenn es sich bei dem Gestellrahmen, in den sie eingebaut sind, um einen Gestellrahmen neuer Bauart handelt.

Die bisherige Beschreibung bezog sich im wesentlichen auf den Gestellrahmen R1 und auf die an seinen Einbauplätzen r1 und r2 eingebauten individuellen Schalteinrichtungen. Bei den an den Einbauplätzen r3 und r4 des Gestellrahmens R2 eingebauten verbindungsindividuellen Schalteinrichtungen ist die Arbeitsweise im wesentlichen die gleiche wie auf der linken Seite in der Zeichnung. Lediglich die Überwachungseinrichtungen U3 und U4 arbeiten etwas anders als die Überwachungseinrichtungen U1 und U2. Die Überwachungseinrichtungen U3 und U4 arbeiten so, daß sie bei Einschaltung der betreffenden individuellen Schalteinrichtung dann, wenn sie über den ersten Steckverbindungskontakt zum Beispiel z41, die Zusatzspannung vorfinden, ihren Umschalter u4 aus der in der Zeichnung dargestellten Ruhelage in ihre Arbeitslage umschalten; wenn sie die Zusatzspannung jedoch nicht vorfinden, wie dies in Zusammenhang mit der am Einbauplatz r3 eingebauten individuellen Schalteinrichtung dargestellt ist, so betätigen sie ihren Umschaltekontakt u3 nicht. Wird eine individuelle Schalteinrichtung in einem Gestellrahmen alter Bauart eingebaut (vergleiche Darstellung in Zusammenhang mit dem Einbauplatz r3) so erhält die betreffende Überwachungseinrichtung, zum Beispiel U3 die Zusatzspannung nicht; sie betätigt ihren Umschalter, zum Beispiel u3, nicht, wodurch die Zusatzspannungszuführungsklemme, zum Beispiel K3, mit dem dritten Steckverbindungskontakt, zum Beispiel z32 verbunden bleibt. Wenn aber ein Gestellrahmen neuer Bauart vorhanden ist (vergleiche Darstellung in Zusammenhang mit dem Einbauplatz r4) so empfängt die Überwachungseinrichtung, zum Beispiel U4 einer individuellen Schalteinrichtung die Zusatzspannung über den ersten Steckverbindungskontakt z41, woraufhin die betreffende Überwachungseinrichtung, zum Beispiel U4, ihren Umschalter, zum Beispiel u4, aus der in der Zeichnung dargestellten Ruhelage in seine Arbeitslage umschaltet und damit die Zusatzspannung der Zusatzspannungszuführungsklemme, zum Beispiel K4 zuführt. Es wird also die Zusatzspannung auch im Falle der Ausführung der individuellen Schalteinrichtungen gemäß Darstellung an den Einbauplätzen r3 und r4 immer der betreffenden Zusatzspannungszuführungsklemme K3 bzw. K4 zugeleitet. Die Überwachungseinrichtungen registrieren, ob der betreffende Gestellrahmen, zum Beispiel r2 ein Gestellrahmen alter Bauart oder ein Gestellrahmen neuer Bauart ist. In Abhängigkeit davon wird der betreffende Umschalter u3 oder u4 nicht betätigt, oder er wird betätigt, wodurch die Zusatzspannung der jeweiligen Zusatzspannungszuführungsklemme zugeleitet wird.

Ist der Gestellrahmen R2 ein Gestellrahmen alter Bauart, so trifft für alle Einbauplätze die Darstellung des Einbauplatzes r3 zu. Fällt die von der Zusatzspannungsquelle G2 gelieferte Zusatzspannung aus, so wird in der bereits beschriebenen Weise der Umschalter g2 betätigt, der gemeinsam für die in diesem Gestellrahmen eingebauten individuellen Schalteinrichtungen vorgesehen ist. Mit Hilfe dieses Umschalters wird in der bereits beschriebenen Weise bewerkstelligt, daß die Zusatzspannung für die individuellen Schalteinrichtungen im Gestellrahmen R2 nunmehr statt von der Zusatzspannungsquelle G2 vielmehr von der Zusatzspannungsquelle G1 geliefert wird.

Ist der Gestellrahmen R2 jedoch ein Gestellrahmen neuer Bauart, so trifft die Darstellung gemäß Einbauplatz r4 zu. Fällt die Zusatzspannung von der Zusatzspannungsquelle G2 aus, so reagiert hierauf die Überwachungseinrichtung U4. Fällt also nach Einschaltung der individuellen Schalteinrichtungen die Zusatzspannung wieder aus, so reagieren hierauf die Überwachungseinrichtungen, zum Beispiel U4,der individuellen Schalteinrichtungen. Sie bewirken, daß jeweils der Umschalter w4 aus der in der Zeichnung dargestellten Ruhelage in seine Arbeitslage umgeschaltet wird. Dadurch wird die Zusatzspannungszuführungsklemme, zum Beispiel K4, von dem ersten Steckverbindungskontakt, zum Beispiel z41, zum zweiten Steckverbindungskontakt, zum Beispiel z43 hin umgeschaltet.

## Patentansprüche

1. Schaltungsanordnung für Fernmeldeanlagen, insbesondere Fernsprechvermittlungsanlagen, in denen
- betriebsspannungsversorgte, individuelle Schalteinrichtungen, insbesondere Teilnehmeranschlußschaltungen, in jeweiligen Einbauplätzen (r1...r4) von Gestellrahmen (R1, R2) untergebracht sind,
- aus Sicherheitsgründen eine erste und eine zweite Zusatzspannungsquelle (G1, G2), insbesondere Rufspannungsquelle, zur Zuführung einer Zusatzspannung, insbesondere Rufwechselspannung, an die Schalteinrichtungen vorgesehen sind,
- die Schalteinrichtungen in eine erste und eine zweite Gruppe (H1, H2) zusammengefaßt und im Normalbetrieb mit einer gruppenweise gleichnamig zugeordneten Zusatzspannungsquelle verbunden sind,
- die Schalteinrichtungen einer Gruppe im Ersatzschaltbetrieb von der zugeordneten zu der der jeweils anderen Gruppe zugeordneten Zusatzspannungsquelle umschaltbar sind,
- für eine Zuführung sowohl der Betriebsspannung als auch der Zusatzspannung Steckverbindungen (Z1...Z4) zwischen jeder Schalteinrichtung einerseits und einem im Gestellrahmen zu jedem Einbauplatz geführten Zuführungskabel (L1, L2) andererseits vorgesehen sind,
- bei Gestellrahmen alter Bauart ein für sämtliche Schalteinrichtungen einer Gruppe gemeinsamer Umschalter (g1, g2) vorgesehen ist, dessen Ruhefeder mit der der jeweiligen Gruppe zugeordneten Zusatzspannungsquelle, dessen Arbeitsfeder mit der jeweils anderen Zusatzspannungsquelle und dessen Mittelfeder über das Zuführungskabel mit einem dritten Steckverbindungskontakt (z12, z22, z32, z42) einer jeden der betreffenden Gruppe zugehörigen Steckverbindung verbunden ist,
- bei Gestellrahmen neuer Bauart die erste und die zweite Zusatzspannungsquelle über das Zuführungskabel mit einem ersten und einem zweiten Steckverbindungskontakt (z11 bzw. z13, z21 bzw. z23, z31 bzw. z33) der Steckverbindung eines jeden Einbauplatzes direkt verbunden sind,
- jede Schalteinrichtung eine Überwachungseinrichtung (U1...U4)
a) zur Überwachung auf ein Vorhandensein der Zusatzspannung an dem ersten Steckverbindungskontakt,
b) zur Verbindung bzw. Belassung einer Verbindung einer in der Schalteinrichtung vorgesehenen Zusatzspannungsführungsklemme (K1...K4) mit dem ersten Steckverbindungskontakt, wenn bei der Einschaltung der Betriebsspannung für die Schalteinrichtung die Zusatzspannung über den ersten Steckverbindungskontakt anliegt,
c) zur Belassung einer Verbindung bzw. Umschaltung von dem ersten Steckverbindungskontakt zu dem dritten Steckverbindungskontakt, wenn bei Einschaltung der Betriebsspannung für die Schalteinrichtung die Zusatzspannung über den ersten Steckverbindungskontakt nicht anliegt,
d) zur Umschaltung der Zusatzspannungsführungsklemme von dem ersten Steckverbindungskontakt zum zweiten Steckverbindungskontakt, wenn nach Einschaltung der Betriebsspannung für die Schalteinrichtung die über die erste Steckverbindung zugeführte Zusatzspannung ausfällt,
aufweist.

2. Schaltungsanordnung nach Anspruch 1, bei der Einbauplätze eingerichtet sind, an denen nicht nur der vorgesehene erste und der vorgesehene zweite Steckverbindungskontakt dementsprechend mit der ersten und mit der zweiten Zusatzspannungsquelle verbunden sind, sondern auch der dritte Steckverbindungskontakt mit der Mittelfeder des Umschalters verbunden ist.

## Claims

1. Circuit configuration for telecommunications systems, especially telephone exchanges, in which
- individual switching devices which are powered by a service voltage, especially subscriber line circuits, are accommodated in respective installation locations (r1...r4) of rack panels (R1, R2),
- for reasons of security, a first and a second auxiliary voltage source (G1, G2), especially call voltage source, are provided for feeding an auxiliary voltage, especially alternating call voltage, to the switching devices,
- the switching devices are combined into a first and a second group (H1, H2) and in normal operation are connected to a groupwise homonymously associated auxiliary voltage source,
- the switching devices of a group can be switched over, in equivalent circuit operation, from the associated auxiliary voltage source to the auxiliary voltage source associated with the respective other group,
- for a supply both of the service voltage and also of the auxiliary voltage plug connections (Z1...Z4) are provided between each switching device on the one hand and a supply cable (L1, L2) passed to each installation location in the rack panel on the other hand,
- in the case of rack panels of old construction a switchover device (g1, g2) which is common to all switching devices of a group is provided, the neutral spring contact of which is connected to the auxiliary voltage source associated with the respective group, the working spring contact of which is connected to the respective other auxiliary voltage source and the centre spring contact of which is connected via the supply cable to a third plug connection contact (z12, z22, z32, z42) of each respective plug connection associated with the pertaining group,
- in the case of rack panels of new construction, the first and the second auxiliary voltage source are directly connected via the supply cable to a first and a second plug connection contact (z11 and z13 respectively, z21 and z23 respectively, z31 and z33 respectively) of the plug connection of each installation location,
- each switching device exhibits a monitoring device (U1...U4)
a) for monitoring for a presence of the auxiliary voltage at the first plug connection contact,
b) for connecting or leaving a connection of an auxiliary voltage terminal (K1...K4) provided in the switching device to the first plug connection contact, if on activating the service voltage for the switching device the auxiliary voltage is present via the first plug connection contact,
c) for leaving a connection or switching over from the first plug connection contact to the third plug connection contact, if on activating the service voltage for the switching device the auxiliary voltage is not present via the first plug connection contact,
d) for switching over the auxiliary voltage terminal from the first plug connection contact to the second plug connection contact, if after activating the service voltage for the switching device the auxiliary voltage supplied via the first plug connection fails.

2. Circuit configuration according to Claim 1, in which installation locations are set up, at which not only the provided first and the provided second plug connection contact are accordingly connected to the first and to the second auxiliary voltage source, but also the third plug connection contact is connected to the centre spring contact of the switchover device.

## Revendications

1. Montage pour installations de télécommunication, notamment installations de commutation téléphonique, dans lesquelles
- des dispositifs individuels de commutation, alimentés par une tension de service, notamment des circuits de raccordement d'abonnés, sont logés en des emplacements respectifs de montage (r1...r4) de bâtis (R1,R2),
- pour des raisons de sécurité, des première et seconde sources de tension supplémentaires (G1,G2), notamment une source de tension d'appel, sont prévues pour l'envoi d'une tension supplémentaire, notamment d'une tension alternative d'appel, aux dispositifs de commutation,
- les dispositifs de commutation sont réunis en un premier groupe et un second groupe (H1,H2) et, pendant le fonctionnement normal, sont reliés à une source de tension supplémentaire, qui est associée de façon correspondante pour chaque groupe,
- les dispositifs de commutation d'un groupe sont commutables, dans le fonctionnement à circuit de remplacement, de la source de tension supplémentaire associée, à la source de tension supplémentaire associée respectivement à l'autre groupe,
- pour l'envoi à la fois de la tension de service et de la tension supplémentaire, des connecteurs (Z1...Z4) sont prévus entre chaque dispositif de commutation d'une part
et un câble d'alimentation (L1,L2) d'autre part qui, dans le bâti, aboutit à chaque emplacement de montage,
- dans le cas de bâtis d'un ancien type de réalisation, il est prévu un commutateur (g1,g2) qui est commun pour tous les dispositifs de commutation d'un groupe et dont le ressort de repos est relié à la source de tension supplémentaire, qui est associée au groupe respectif et dont le ressort de fonctionnement est relié à l'autre source respective de tension supplémentaire et dont le ressort central est relié par l'intermédiaire du câble d'alimentation à un troisième contact de connecteur (z12, z22,z32,z42) de chaque connecteur associé au groupe considéré,
- dans le cas de bâtis d'un nouveau type de réalisation, les première et seconde sources de tension supplémentaire sont reliées directement, par l'intermédiaire du câble d'alimentation, à des premier et second contacts de connecteur (z11 ou z13, z21 ou z23, z31 ou z33) du connecteur de chaque emplacement de montage,
- chaque dispositif de commutation possède un dispositif de contrôle (U1...U4),
a) pour contrôler la présence de la tension supplémentaire sur le premier contact de connecteur,
b) pour établir ou maintenir une liaison d'une borne (K1 ...K4) d'amenée de la tension supplémentaire, prévue dans le dispositif de commutation, avec le premier contact de connecteur, lorsque, lors du branchement de la tension de service pour le dispositif de commutation, la tension supplémentaire est appliquée par l'intermédiaire du premier contact de connecteur,
c) pour maintenir une liaison ou effectuer une commutation du premier contact de connecteur au troisième contact de connecteur, lorsque, lors du branchement de la tension de service pour le dispositif de commutation, la tension supplémentaire n'est pas appliquée au moyen du premier contact de connecteur,
d) pour commuter la borne d'alimentation de la tension supplémentaire depuis le premier contact de connecteur sur le second contact de connecteur, lorsqu'après le branchement de la tension de service pour le dispositif de commutation, la tension supplémentaire, envoyée par l'intermédiaire du premier connecteur, est défaillante.

2. Montage suivant la revendication 1, dans lequel des emplacements de montage sont établis, sur lesquels non seulement le premier contact prévu de connecteur et le second contact prévu de connecteur sont reliés de façon correspondante à la première source de tension supplémentaire et à la seconde source de tension supplémentaire, mais également le troisième contact de connecteur est relié au ressort central du commutateur.
